(19) 

Europäisches
Patentamt

European
Patent Office

Office européen
des brevets

(11) **EP 3 154 318 B1**

(12) **EUROPEAN PATENT SPECIFICATION**

(45) Date of publication and mention
of the grant of the patent:
**22.08.2018 Bulletin 2018/34**

(51) Int Cl.:
***H05B 37/02*** *(2006.01)*     ***G06K 9/00*** *(2006.01)*

(21) Application number: **16192220.8**

(22) Date of filing: **04.10.2016**

(54) **SYSTEM FOR CONTROLLING ILLUMINATION IN A ROAD TUNNEL AND METHOD OF ESTIMATING A VEILING LUMINANCE**

SYSTEM ZUR STEUERUNG DER BELEUCHTUNG IN EINEM STRASSENTUNNEL UND VERFAHREN ZUR SCHÄTZUNG EINES SCHLEIERLEUCHTDICHTE

SYSTÈME DE COMMANDE DE L'ÉCLAIRAGE DANS UN TUNNEL ROUTIER ET PROCÉDÉ D'ESTIMATION D'UNE LUMINANCE VOILÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2015 SE 1551311**

(43) Date of publication of application:
**12.04.2017 Bulletin 2017/15**

(73) Proprietor: **Cipherstone Technologies AB**
**417 55 Göteborg (SE)**

(72) Inventors:
• **Jonsson, Kenneth**
**417 55 Göteborg (SE)**

• **Tingdahl, David**
**417 55 Göteborg (SE)**
• **Samuelsson, David**
**417 55 Göteborg (SE)**

(74) Representative: **Kransell & Wennborg KB**
**P.O. Box 27834**
**115 93 Stockholm (SE)**

(56) References cited:
**WO-A1-2006/003600**    **WO-A1-2015/055737**
**CN-A- 104 034 413**    **JP-A- 2001 148 295**
**JP-A- 2008 241 380**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The present invention relates to a system for controlling illumination in a road tunnel and to a method of estimating a veiling luminance.

Background of the Invention

For a driver approaching a road tunnel, it may be difficult to distinguish objects just inside the tunnel. To provide for a safe approach to and passage through the tunnel, there are guides for the lighting of road tunnels. One such guide is CIE 88:2004 "GUIDE FOR THE LIGHTING OF ROAD TUNNELS AND UNDERPASSES" with ISBN no: 3 901 906 31 2.

In this guide, instructions are provided for how to determine the so-called threshold luminance that the tunnel illumination should provide. According to the guide, one important parameter for determining the threshold luminance is the so-called veiling luminance. The veiling luminance, which is a measure of glare forming a "veil" over the eye and hindering the eye's ability to see, contains terms related to scattering in the atmosphere, in the windscreen of the vehicle and inside the eye of the driver.

Since the veiling luminance will vary depending on various factors, such as the configuration of the tunnel entrance scene as seen from the so-called stopping distance, the time of day, the time of year and the weather etc, dimensioning the tunnel illumination for the worst case will most likely result in excessive energy consumption and may even cause problems due to too bright illumination.

To handle this situation, adaptive tunnel illumination systems exist, in which a luminance sensor is provided outside the tunnel and directed towards the tunnel entrance. The output of the luminance sensor is used as input for the control of the tunnel illumination.

Although being considerably better than non-adaptive tunnel illumination, it would appear that there is still room for improvement of the existing adaptive tunnel illumination control systems, in particular in respect of the accuracy in the estimation of the veiling luminance.

It would thus be desirable to provide an improved system for controlling illumination in a road tunnel, in particular providing for increased accuracy in the estimation of the veiling luminance.

JP2008241380 discloses tunnel lighting system comprising an equivalent veiling luminance measuring device generating luminance distribution data showing the luminance value for each pixel based on a gradation value of each pixel constituting a photographed image with respect to photographed image data of the photographed image obtained by photographing a visible object, and calculating the equivalent veiling luminance Leq of the visible object based on the luminance distribution data.

Summary

In view of above-mentioned and other drawbacks of the prior art, it is an object of the present invention to provide for increased accuracy in the estimation of veiling luminance to allow for improved control of the illumination in a road tunnel.

According to a first aspect of the present invention, it is therefore provided a system for controlling illumination in a road tunnel, comprising: at least one light-source arranged inside the road tunnel for illuminating an interior of the road tunnel; a veiling luminance estimation system for estimating a veiling luminance experienced by a driver exhibiting a driver viewing pose towards a tunnel entrance of the road tunnel, the driver viewing pose defining at least a driver vertical position and a driver viewing direction; and a lighting controller connected to the veiling luminance estimation system and to the at least one light-source for controlling at least one property of light emitted by the at least one light-source based on the estimated veiling luminance, wherein the veiling luminance estimation system comprises: an image sensor exhibiting an image sensor viewing pose towards the tunnel entrance, different from the driver viewing pose, the image sensor viewing pose defining at least an image sensor vertical position and an image sensor viewing direction; image acquisition circuitry connected to the image sensor for acquiring an image of a tunnel entrance scene, the image comprising a plurality of pixels; and veiling luminance estimation circuitry connected to the image acquisition circuitry and configured to: determine a plurality of pixel based on a weighted sum of the luminance indicator values of each of the pixel sets using the estimation weights, wherein at least one of the plurality of pixel sets, the luminance indicator value of each of the pixel sets, and the estimation weight assigned to each of the pixel sets is determined based on a relation between the driver viewing pose and the image sensor viewing pose.

According to the above-mentioned CIE 88:2004, the veiling luminance $L_{eq}$, can be determined by means of a graphical method based on the Holladay-Stiles formula. If sufficient data is available, it is also possible to directly determine the veiling luminance using the Holladay-Stiles formula:

$$L_{eq} = 10E_{gl}/\theta^2, \qquad\qquad\qquad (1)$$

wherein $L_{eq}$ is the veiling luminance (cd/m$^2$), $E_{gl}$ is the glare illuminance on the eye (lux) and $\theta$ is the glare angle (°).

In existing adaptive tunnel illumination systems, the luminance sensor used for measuring the veiling luminance is often arranged considerably higher than the driver approaching the tunnel entrance. It is therefore likely that the veiling luminance measured by such a luminance sensor will not be correct, as the tunnel entrance scene will be different for the different heights.

The present inventors have surprisingly found that it is often not sufficient to measure the veiling luminance at the two different heights and determine a scaling factor based on the two measurements, but that different conditions outside the road tunnel, for example depending on the time of day, time of year or weather etc, may result in widely varying scaling factors.

The inventors have further realized that an improved estimation of the veiling luminance experienced by a driver can be achieved by estimating the veiling luminance based on an image captured by an image sensor, and the application of image processing that is dependent on a relation between a driver viewing pose and an image sensor viewing pose.

Hereby, the veiling luminance can be estimated more accurately, which in turn provides for a more accurate control of the tunnel illumination. This allows for improved traffic safety while minimizing energy consumption.

It should be understood that the difference between the driver viewing pose and the image sensor viewing pose need not be compensated for completely for the system according to embodiments of the present invention to provide for a more accurate estimation of the veiling luminance. For instance, basing the determination of the plurality of pixel sets, the luminance indicator values, or the estimation weights on the relation between the vertical position of the driver and the vertical position of the image sensor would also provide for an improved veiling luminance estimation.

The luminance indicator value of a pixel set may be any parameter value indicating the luminance contribution from the portion of the tunnel entrance scene corresponding to the pixel set. For instance, the luminance indicator value may advantageously be a value indicative of an illuminance sensed by a portion of the image sensor corresponding to the pixel set. Such a value may simply be an average pixel value, such as a digital value between 0 and 255 in case of an 8-bit pixel representation, or 0 to 65535 in case of a 16-bit pixel representation.

According to various embodiments, the determination of at least one of the plurality of pixel sets, the luminance indicator value of each of the pixel sets, and the estimation weight assigned to each of the pixel sets may comprise a transformation between the driver viewing pose and the image sensor viewing pose. It should be understood that the transformation need not be a complete transformation between the driver viewing pose and the image sensor viewing pose, but that the transformation may be partial and still provide for an improved veiling luminance estimation. For instance, the transformation may be only in respect of a projection of the different poses in a vertical plane including the driver viewing direction.

The above-mentioned transformation may advantageously be a perspective transformation, for compensating for the difference in perspective between the driver viewing pose and the image sensor viewing pose.

Such a perspective transformation may compensate for differences in proportions between, for example, road surface and sky, while still allowing the image sensor to be centered on the road tunnel entrance opening in the tunnel entrance scene.

Furthermore, the above-mentioned transformation may advantageously be applied to at least one of the acquired image, a polar diagram defining the pixel sets, and a weight matrix for assigning estimation weights to each of the pixel sets.

According to a first set of embodiments, the estimation weight may be assigned to each of the pixel sets by determining a first weight matrix for the driver viewing pose, wherein each weight element in the first weight matrix is inversely proportional to the square of a glare angle with respect to the tunnel entrance; and performing the transformation on the first weight matrix from the driver viewing pose to the image sensor viewing pose, to form a second weight matrix for the image sensor viewing pose.

In these embodiments, each of the pixel sets may comprise at least one of the pixels of the acquired image; and the estimation of the veiling luminance may include multiplying each of the pixel sets with its corresponding weight element in the second weight matrix.

These embodiments may use a version of the Holladay-Stiles formula provided above, with the weight elements (proportional to $1/\theta^2$ for the driver viewing pose) being transformed based on a relation between the driver viewing pose and the image sensor viewing pose.

It should be understood that such a transformation need only be made once for a given adaptive tunnel illumination system.

According to a second set of embodiments, the plurality of pixel sets may be determined by providing a first polar diagram for the driver viewing pose, defining first sections representing individual glare sources at different glare angles with respect to the tunnel entrance; performing the transformation on the first polar diagram from the driver viewing pose to the image sensor viewing pose, to form a second polar diagram, defining second sections, for the image sensor viewing pose; and dividing the pixels of the acquired image into the pixel sets based on positions of the pixels in relation to the second sections.

These embodiments utilize a graphical and discretized representation of the Holladay-Stiles formula, in which the weights of the glare sources in the Holladay-Stiles formula (proportional to $1/\theta^2$ for the driver viewing pose) are instead implemented as polar sections of such sizes that the luminance from the different polar sections can simply be summed with the same estimation weight assigned to the luminance from each polar section.

The transformation of the first polar diagram to the second polar diagram is thus analogous to the above-mentioned transformation of the weight matrix. The transformation of the first polar diagram to the second polar diagram need only be carried out once for a given adaptive tunnel illumination system.

According to a third set of embodiments, the transformation may be performed on the acquired image, from the image sensor viewing pose to the driver viewing pose, to form a transformed image having a plurality of pixels being based on the pixels of the acquired image.

To estimate the veiling luminance, the Holladay-Stiles formula, or the above-described graphical and discretized representation of the Holladay-Stiles formula may be applied to the transformed image.

According to a second aspect of the present invention, there is provided a method of estimating a veiling luminance experienced by a driver exhibiting a driver viewing pose towards a tunnel entrance of a road tunnel, using a veiling luminance estimation system comprising: an image sensor exhibiting an image sensor viewing pose towards the tunnel entrance, different from the driver viewing pose; image acquisition circuitry connected to the image sensor for acquiring an image of a tunnel entrance scene, the image comprising a plurality of pixels; and veiling luminance estimation circuitry connected to the image acquisition circuitry, wherein the method comprises the steps of: determining, by the veiling luminance estimation circuitry, a plurality of pixel sets based on the image; determining, by the veiling luminance estimation circuitry, for each pixel set in the plurality of pixel sets, a luminance indicator value indicative of a luminance contribution from a portion of the tunnel entrance scene corresponding to the pixel set; assigning, by the veiling luminance estimation circuitry, an estimation weight to each of the pixel sets; and estimating, by the veiling luminance estimation circuitry, the veiling luminance based on a weighted sum of the luminance indicator values of each of the pixel sets using the estimation weights, wherein at least one of the plurality of pixel sets, the luminance indicator value of each of the pixel sets, and the estimation weight assigned to each of the pixel sets is determined based on a relation between the driver viewing pose and the image sensor viewing pose.

Embodiments of the above method of estimating the veiling luminance may, furthermore, be included in a method of controlling illumination in a road tunnel using an illumination control system comprising: at least one light-source arranged inside the road tunnel for illuminating an interior of the road tunnel; a veiling luminance estimation system arranged outside the tunnel for estimating a veiling luminance experienced by a driver exhibiting a driver viewing pose towards a tunnel entrance of the road tunnel, the veiling luminance estimation system comprising: an image sensor exhibiting an image sensor viewing pose towards the tunnel entrance, different from the driver viewing pose; image acquisition circuitry connected to the image sensor for acquiring an image of a tunnel entrance scene, the image comprising a plurality of pixels; and veiling luminance estimation circuitry connected to the image acquisition circuitry; and a lighting controller connected to the veiling luminance estimation system and to the at least one light-source for controlling at least one property of light emitted by the at least one light-source based on the estimated veiling luminance, further comprising the steps of providing the estimated veiling luminance to the lighting controller; and controlling, by the lighting controller, the at least one light-source to change at least one property of light emitted by the at least one light-source based on the estimated veiling luminance.

Further embodiments of, and effects obtained through this second aspect of the present invention are largely analogous to those described above for the first aspect of the invention.

In summary, the present invention thus relates to a system for controlling illumination in a road tunnel, comprising: at least one light-source arranged inside the road tunnel for illuminating an interior of the road tunnel; a veiling luminance estimation system arranged outside the tunnel for estimating a veiling luminance experienced by a driver exhibiting a driver viewing pose towards a tunnel entrance of the road tunnel, the driver viewing pose defining at least a driver vertical position and a driver viewing direction; and a lighting controller connected to the veiling luminance estimation system and to the at least one light-source for controlling at least one property of light emitted by the at least one light-source based on the estimated veiling luminance.

Brief Description of the Drawings

These and other aspects of the present invention will now be described in more detail, with reference to the appended drawings showing an example embodiment of the invention, wherein:

Figs 1a-b schematically show an embodiment of the system according to the invention;
Fig 2a illustrates the tunnel entrance scene for the image sensor viewing pose;

Fig 2b illustrates the tunnel entrance scene for the driver viewing pose;
Fig 3 is a schematic block diagram of the system in figs 1a-b;
Figs 4a-c schematically illustrate a first embodiment of the veiling luminance estimation method according to the present invention; and
Figs 5a-c schematically illustrate a second embodiment of the veiling luminance estimation method according to the present invention.

Detailed Description of Example Embodiments

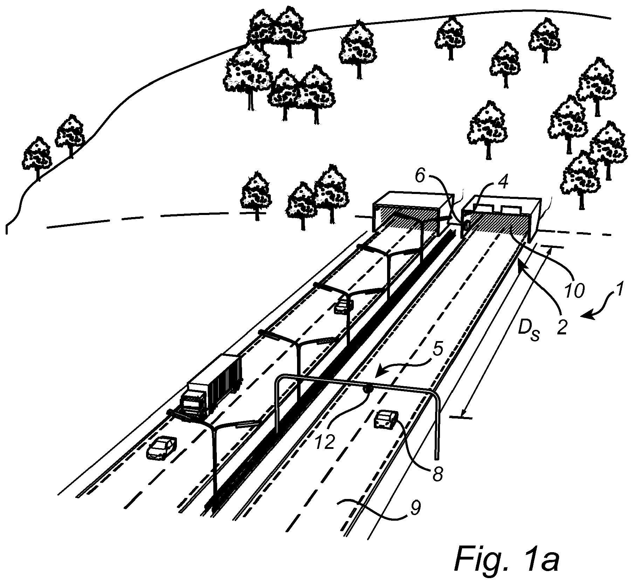

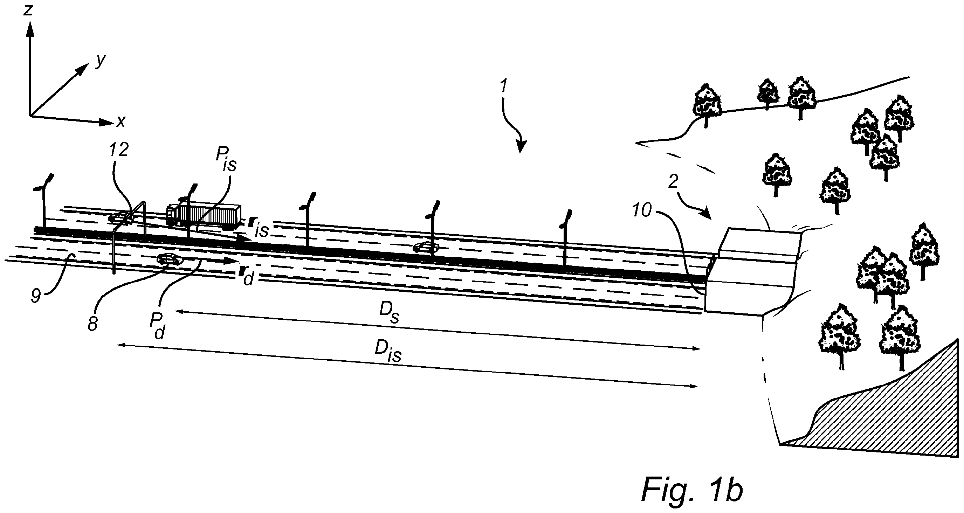

Fig 1 schematically shows a tunnel illumination control system 1 according to embodiments of the present invention for controlling illumination in a road tunnel 2. Referring to fig 1a, the system 1 comprises at least one light-source 4 arranged inside the road tunnel, a veiling luminance estimation system 5, and a lighting controller 6, here schematically illustrated as a box on the interior wall of the road tunnel.

When a driver 8 traveling on the road 9 approaches the tunnel entrance 10 of the road tunnel 2 during daytime, it will be important to illuminate at least the so-called threshold zone of the road tunnel 2 sufficiently to allow the driver to perceive objects at the tunnel entrance 10 at least from a predefined stopping distance $D_s$ away from the tunnel entrance 10. To achieve this, the light-sources 4 inside the road tunnel 2 should be controlled to achieve a so-called threshold luminance in the threshold zone. The threshold luminance in turn depends on the veiling luminance experienced by the driver 8 at the stopping distance $D_s$ from the tunnel entrance 10.

For estimating the veiling luminance, the veiling luminance estimation system 5 comprises an image sensor 12 arranged above the road 9. The image sensor 12 may advantageously be arranged at a considerably higher vertical position than the driver, as is schematically indicated in fig 1a, in order to reduce the risk of vandalism and contamination of the image sensor 12. Alternatively or in combination, the image sensor 12 may be laterally offset, so that it is arranged at the side of the road.

In 1b, the traffic scene in fig 1a is illustrated in a side view to show the difference in perspective for the driver 8 and the image sensor 12, respectively. Referring to fig 1b, the driver is shown to be at the above-described stopping distance $D_s$ from the tunnel entrance 10, and the image sensor 12 is shown to be at an image sensor distance $D_{is}$ from the tunnel entrance 10. The image sensor distance $D_{is}$ may advantageously, but not necessarily, be identical to the stopping distance $D_s$.

The driver 8 is here shown to exhibit a driver viewing pose $P_d$ defined by at least the driver vertical position $z_d$ and the driver viewing direction $r_d$, and the image sensor 12 is shown to exhibit an image sensor viewing pose $P_{is}$ defined by at least the image sensor vertical position $z_{is}$ and the image sensor viewing direction $\mathbf{r}_{is}$. Naturally, the driver viewing pose $P_d$ may alternatively be defined by the driver position in space $(x_d, y_d, z_d)$ and the driver viewing direction $\mathbf{r}_d$, and the image sensor viewing pose $P_{is}$ may alternatively be defined by the image sensor position in space $(x_{is}, y_{is}, z_{is})$ and the image sensor viewing direction $\mathbf{r}_{is}$. The viewing directions $\mathbf{r}_d$ and $\mathbf{r}_{is}$ may, for example, be represented by Euler angles $(\varphi, \theta, \psi)$.

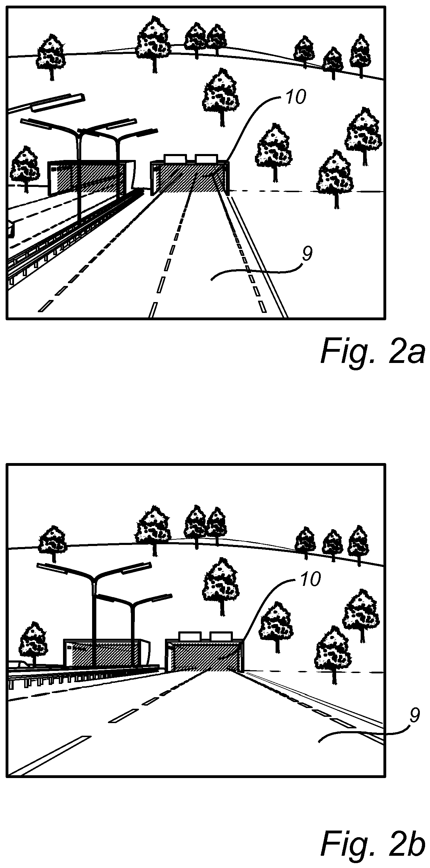

As is clear from figs 1a-b, the tunnel entrance scene will look different for the image sensor viewing pose $P_{is}$ than for the driver viewing pose $P_d$. This is illustrated in figs 2a-b, where fig 2a schematically shows the tunnel entrance view for the image sensor pose $P_{is}$, and fig 2b schematically shows the tunnel entrance view for the driver pose $P_d$.

Comparing fig 2a and fig 2b, it is easy to understand that the veiling luminance for the image sensor pose $P_{is}$ (fig 2a) will be quite different from the veiling luminance for the driver pose $P_d$ (fig 2b). For instance, the tunnel entrance view for the driver pose $P_d$ (fig 2b) contains considerably more road surface and sky than the tunnel entrance view for the image sensor pose $P_{is}$ (fig 2a).

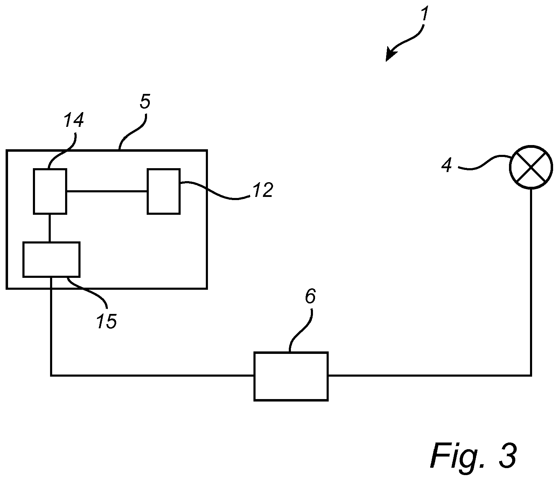

Before going into further detail concerning embodiments of the method carried out by the tunnel illumination system according to the present invention, an embodiment of the tunnel illumination system will be described in greater detail with reference to the block diagram in fig 3.

Referring to fig 3, the tunnel illumination system according to embodiments of the present invention comprises a light-source arranged in the road tunnel, a veiling luminance estimation system 5, and a lighting controller 6. The veiling luminance estimation system 5 estimates a veiling luminance experienced by a driver exhibiting a driver viewing pose $P_d$ towards the tunnel entrance, and the lighting controller 6 is connected to the veiling luminance estimation system 5 and to the light-source 4 for controlling at least one property of light emitted by the light-source 4 based on the estimated veiling luminance.

The veiling luminance estimation system 5 comprises an image sensor 12, image acquisition circuitry 14 connected to the image sensor 12 for acquiring an image of the tunnel entrance scene, and veiling luminance estimation circuitry 15 connected to the image acquisition circuitry 14 for estimating the veiling luminance for the driver viewing pose based on the acquired image and a relation between the image sensor pose $P_{is}$ and the driver viewing pose $P_d$.

In particular, the veiling luminance estimation circuitry 15 is configured to determine a plurality of pixel sets based on the acquired image, determine, for each pixel set in the plurality of pixel sets, a luminance indicator value indicative of a luminance contribution from a portion of the tunnel entrance scene corresponding to the pixel set, assign an estimation weight to each of the pixel sets, and estimate the veiling luminance based on a weighted sum of the luminance indicator values of each of the pixel sets using the estimation weights.

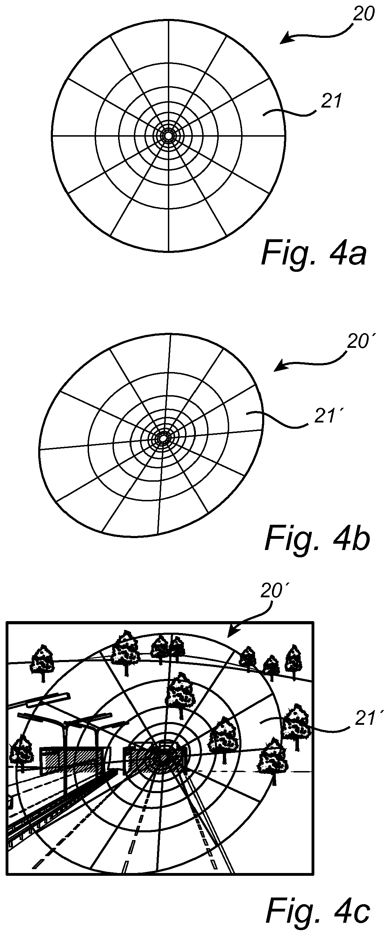

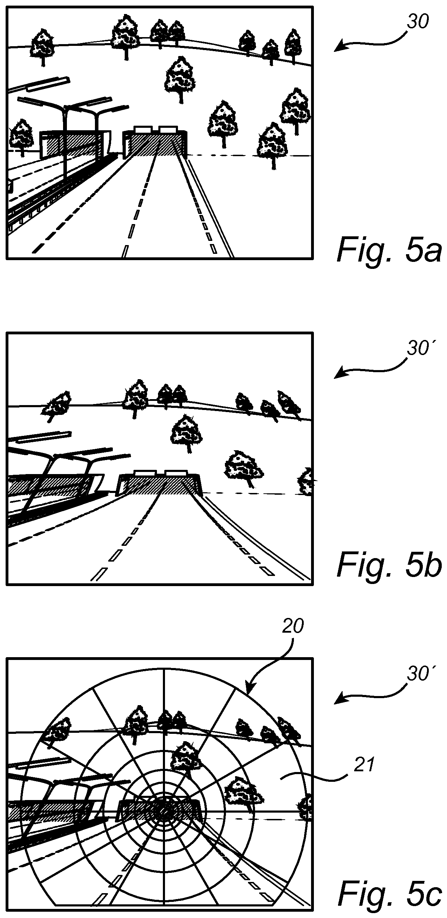

As will be described below with reference to figs 4a-c and figs 5a-c, at least one of the plurality of pixel sets, the luminance indicator value of each of the pixel sets, and the estimation weight assigned to each of the pixel sets is determined based on a relation between the driver viewing pose and the image sensor viewing pose.

Figs 4a-c schematically illustrate a first embodiment for estimating the veiling luminance for the driver viewing pose $P_d$ based on an image acquired by the image sensor 12 exhibiting the image sensor viewing pose $P_{is}$.

Referring first to fig 4a, the standard polar diagram 20 as provided by the above-mentioned CIE 88:2004 is shown. As mentioned above, this polar diagram 20 is a graphical and discretized representation of the Holladay-Stiles formula, and the sizes of the sections 21 are chosen to represent the angle dependent weight factor so that the total weight of each section 21 is the same, and the luminance contribution from each section can be added together (each section having the same estimation weight).

By superimposing the polar diagram 20 in fig 4a on the image acquired from the image sensor 12, forming pixel sets by assigning pixels overlapping with a section 21 to the same pixel set, and summing the luminance contributions from each pixel set/section (with the same estimation weight for each pixel set), the veiling luminance for the image sensor viewing pose $P_{is}$ can be estimated.

To instead allow estimation of the desired veiling luminance for the driver viewing pose $P_d$, the standard polar diagram is transformed from the driver viewing pose $P_d$ to the image sensor viewing pose $P_{is}$ to form a transformed polar diagram 20' with transformed sections 21'.

According to one example, the transformation can be carried out by utilizing a 3D representation of the scene. The 3D representation can by obtained by for example applying lidar scanning, structure-from-motion and/or stereo vision to images from camera sensors placed at different vantage points. The model can also be provided as a simplified, man-made, representation of the scene.

Below, the transformation from the image sensor viewing pose to the driver viewing pose is described. As is well-known to the person skilled in the art, the transformation from the driver viewing pose to the image sensor viewing pose is simply the inverse transformation.

Applying the linear pinhole camera model, a 3D scene point $M$ is projected into the (homogeneous) image point m in the driver's field of view (FOV) as

$$m_d = K_d\, R_d^{\ T}\, (M - t_d) \qquad\qquad (2)$$

Where subscript d indicates driver, and:

$K_d$: Given affine matrix (3x3) representing the internal calibration of the camera. Brings a point from image sensor frame to pixel space.

$R_d$: Given rotation matrix (3x3). Represents a rotation from the image sensor frame to the global frame. In the driver's camera frame, the optical axis is typically pointing towards the tunnel entrance (gaze direction).

$t_d$: Given translation vector (3x1). Represents the location of the optical center of the driver's view (typically 1.5m above the road).

Equation (2) can be used to render the driver's FOV provided that a dense 3D model (mesh) along with luminance values for all its points is available.

If no dense 3D model is available, we may consider a simplified approach where the world is modeled as a single ground plane, extending to infinity in all directions and aligned with the road surface. Noting that our sought transformation involves the transfer between three 3D planes (image sensor plane → world plane → driver image plane) we can find T as the plane-induced transfer homography:

$$T = K_d\, R_d^{\ T}\, (I + t_d\, \pi^T)(I + t_s\, \pi^T)^{-1}\, R_s\, K_s^{\ -1} \qquad\qquad (3)$$

where subscript s indicates sensor. Furthermore:

$I$: Identity matrix (3x3)
$\pi$: Given normal of the ground plane, e.g. [0 1 0] for the plane y=0.

By superimposing the transformed polar diagram 20' on the image acquired from the image sensor 12 as shown in fig 4c, and summing the luminance contributions for each section 21' as described above, the veiling luminance for the driver viewing pose $P_d$ can be estimated based on the image acquired from the image sensor and a relation between the driver viewing pose $P_d$ and the image sensor viewing pose $P_{is}$. In this particular example embodiment, the plurality of pixel sets (determined by the transformed sections 21') have been determined based on a relation between the driver viewing pose $P_d$ and the image sensor viewing pose $P_{is}$.

As is readily understood by a person skilled in the relevant art, the above-described transformation of the standard polar diagram 20 is equivalent to transforming a weight matrix representing the weights in the Holladay-Stiles formula to a transformed weight matrix (with transformed weight elements). To estimate the veiling luminance for the driver viewing pose $P_d$, the transformed weight elements can be assigned to pixel sets (typically individual pixels) of the acquired image, and the veiling luminance be estimated based on a weighted sum of the luminance indicator values of the pixels sets (pixels) using the transformed weight elements as estimation weights.

In this case, the estimation weights are thus determined based on a relation between the driver viewing pose $P_d$ and the image sensor viewing pose $P_{is}$.

Figs 5a-c schematically illustrate a second embodiment for estimating the veiling luminance for the driver viewing pose $P_d$ based on an image acquired by the image sensor 12 exhibiting the image sensor viewing pose $P_{is}$.

Fig 5a shows the image 30 acquired by the image sensor 12 exhibiting the image sensor pose $P_{is}$.

This image 30 is perspective transformed from the image sensor viewing pose $P_{is}$ to the driver viewing pose $P_d$ to form a transformed image 30' as is schematically shown in fig 5b.

The transformed image 30' obviously comprises pixels that are based on the pixels of the acquired image 30, and on a relation between the driver viewing pose $P_d$ and the image sensor viewing pose $P_{is}$.

As is illustrated in fig 5c, the veiling luminance for the driver viewing pose $P_d$ is finally estimated by superimposing the polar diagram 20 in fig 4a on the transformed image 30', forming pixel sets by assigning pixels overlapping with a section 21 to the same pixel set, and summing the luminance contributions from each pixel set/section (with the same estimation weight for each pixel set).

In this example embodiment, the plurality of pixel sets as well as the luminance indicator values of each pixel set (pixels of the transformed image 30' overlapping with the sections 21) have been determined based on a relation between the driver viewing pose $P_d$ and the image sensor viewing pose $P_{is}$.

The person skilled in the art realizes that the present invention by no means is limited to the preferred embodiments described above. On the contrary, many modifications and variations are possible within the scope of the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A system (1) for controlling illumination in a road tunnel (2), comprising:

   at least one light-source (4) arranged inside said road tunnel (2) for illuminating an interior of said road tunnel;
   **characterized in that** said system further comprises:

   a veiling luminance estimation system (5) for estimating a veiling luminance experienced by a driver (8) exhibiting a driver viewing pose ($P_d$) towards a tunnel entrance (10) of said road tunnel (2), said driver viewing pose ($P_d$) defining at least a driver vertical position and a driver viewing direction ($\mathbf{r}_d$); and
   a lighting controller (6) connected to said veiling luminance estimation system (5) and to said at least one light-source (4) for controlling at least one property of light emitted by said at least one light-source based on said estimated veiling luminance,
   wherein said veiling luminance estimation system (5) comprises:

   an image sensor (12) exhibiting an image sensor viewing pose ($P_{is}$) towards said tunnel entrance (10), different from said driver viewing pose ($P_d$), said image sensor viewing pose ($P_{is}$) defining at least an image sensor vertical position and an image sensor viewing direction ($\mathbf{r}_{is}$);
   image acquisition circuitry (14) connected to said image sensor (12) for acquiring an image (30) of a tunnel entrance scene, said image comprising a plurality of pixels; and

veiling luminance estimation circuitry (15) connected to said image acquisition circuitry (14) and configured to:

determine a plurality of pixel sets based on said image (30);

determine, for each pixel set in said plurality of pixel sets, a luminance indicator value indicative of a luminance contribution from a portion of said tunnel entrance scene corresponding to said pixel set;

assign an estimation weight to each of said pixel sets; and

estimate said veiling luminance based on a weighted sum of the luminance indicator values of each of said pixel sets using said estimation weights,

wherein at least one of:

said plurality of pixel sets;

said luminance indicator value of each of said pixel sets; and

said estimation weight assigned to each of said pixel sets,

is determined based on a relation between said driver viewing pose ($P_d$) and said image sensor viewing pose ($P_{is}$).

2. The system (1) according to claim 1, wherein, for a given viewing distance, said driver viewing pose ($P_d$) defines a first vertical position, and said image sensor viewing pose ($P_{is}$) defines a second vertical position, the second vertical position being higher than the first vertical position.

3. The system (1) according to claim 1 or 2, wherein said luminance indicator value is a value indicative of an illuminance sensed by a portion of said image sensor (12) corresponding to said pixel set.

4. The system (1) according to any one of the preceding claims,
wherein the determination of at least one of said plurality of pixel sets, said luminance indicator value of each of said pixel sets, and said estimation weight assigned to each of said pixel sets comprises a transformation between said driver viewing pose ($P_d$) and said image sensor viewing pose ($P_{is}$).

5. The system (1) according to claim 4, wherein said transformation is a perspective transformation.

6. The system (1) according to claim 4 or 5, wherein said transformation is applied to at least one of said acquired image, a polar diagram (20) defining said pixel sets (21), and a weight matrix for assigning estimation weights to each of said pixel sets.

7. The system (1) according to claim 6, wherein said estimation weight is assigned to each of said pixel sets by:

determining a first weight matrix for said driver viewing pose, wherein each weight element in said first weight matrix is inversely proportional to the square of a glare angle with respect to said tunnel entrance (10); and
performing said transformation on said first weight matrix from said driver viewing pose ($P_d$) to said image sensor viewing pose ($P_{is}$), to form a second weight matrix for said image sensor viewing pose ($P_{is}$).

8. The system (1) according to claim 7, wherein:

each of said pixel sets comprises at least one of the pixels of the acquired image; and
estimation of said veiling luminance includes multiplying each of said pixel sets with its corresponding weight element in said second weight matrix.

9. The system (1) according to claim 6, wherein said plurality of pixel sets is determined by:

providing a first polar diagram (20) for said driver viewing pose, defining first sections (21) representing individual glare sources at different glare angles with respect to said tunnel entrance (10);
performing said transformation on said first polar diagram from said driver viewing pose ($P_d$) to said image sensor viewing pose ($P_{is}$), to form a second polar diagram (20'), defining second sections (21'), for said image sensor viewing pose ($P_{is}$); and
dividing the pixels of the acquired image into said pixel sets based on positions of the pixels in relation to said second sections (21').

10. The system (1) according to claim 6, wherein said transformation is performed on the acquired image, from said image sensor viewing pose ($P_{is}$) to said driver viewing pose ($P_d$), to form a transformed image having a plurality of pixels being based on the pixels of the acquired image (30).

11. A method of estimating a veiling luminance experienced by a driver (8) exhibiting a driver viewing pose ($P_d$) towards a tunnel entrance (10) of a road tunnel (2), using a veiling luminance estimation system (5) comprising:

> an image sensor (12) exhibiting an image sensor viewing pose ($P_{is}$) towards said tunnel entrance (10), different from said driver viewing pose ($P_d$);
> image acquisition circuitry (14) connected to said image sensor (12) for acquiring an image (30) of a tunnel entrance scene, said image comprising a plurality of pixels; and
> veiling luminance estimation circuitry (15) connected to said image acquisition circuitry (14),
> wherein the method comprises the steps of:
>
>> determining, by said veiling luminance estimation circuitry (15), a plurality of pixel sets based on said image (30);
>> determining, by said veiling luminance estimation circuitry (15), for each pixel set in said plurality of pixel sets, a luminance indicator value indicative of a luminance contribution from a portion of said tunnel entrance scene corresponding to said pixel set;
>> assigning, by said veiling luminance estimation circuitry (15), an estimation weight to each of said pixel sets; and
>> estimating, by said veiling luminance estimation circuitry (15), said veiling luminance based on a weighted sum of the luminance indicator values of each of said pixel sets using said estimation weights,
>> wherein at least one of said plurality of pixel sets, said luminance indicator value of each of said pixel sets, and said estimation weight assigned to each of said pixel sets is determined based on a relation between said driver viewing pose ($P_d$) and said image sensor viewing pose ($P_{is}$).

12. The method according to claim 11, wherein at least one of:

> the step of determining said plurality of pixel sets;
> the step of determining said luminance indicator value of each of said pixel sets; and
> the step of assigning an estimation weight to each of said pixel sets,
> comprises the step of performing a transformation between said driver viewing pose ($P_d$) and said image sensor viewing pose ($P_{is}$).

13. The method according to claim 12, wherein said transformation is a perspective transformation.

14. A method of controlling illumination in a road tunnel (2) using an illumination control system (1) comprising:

> at least one light-source (4) arranged inside said road tunnel (2) for illuminating an interior of said road tunnel;
> a veiling luminance estimation system (5) arranged outside said tunnel (2) for estimating a veiling luminance experienced by a driver (8) exhibiting a driver viewing pose ($P_d$) towards a tunnel entrance (10) of said road tunnel (2), said veiling luminance estimation system (5) comprising:
>
>> an image sensor (12) exhibiting an image sensor viewing pose ($P_{is}$) towards said tunnel entrance (10), different from said driver viewing pose ($P_d$);
>> image acquisition circuitry (14) connected to said image sensor (12) for acquiring an image of a tunnel entrance scene, said image comprising a plurality of pixels; and
>> veiling luminance estimation circuitry (15) connected to said image acquisition circuitry (14); and
>
> a lighting controller (6) connected to said veiling luminance estimation system (5) and to said at least one light-source (4) for controlling at least one property of light emitted by said at least one light-source based on said estimated veiling luminance,
> wherein said method comprises the steps of:
>
>> estimating said veiling luminance experienced by said driver (8) using the method according to any one of claims 11 to 13;
providing said estimated veiling luminance to said lighting controller (6); and
controlling, by said lighting controller (6), said at least one light-source (4) to change at least one property of light emitted by the at least one light-source based on the estimated veiling luminance.

**Patentansprüche**

1. System (1) zum Steuern einer Beleuchtung in einem Straßentunnel (2), umfassend:

mindestens eine Lichtquelle (4), die innerhalb des Straßentunnels (2) zum Beleuchten eines Inneren des Straßentunnels angeordnet ist;
**dadurch gekennzeichnet, dass** das System weiter umfasst:

ein Schleierleuchtdichtenabschätzungssystem (5) zum Abschätzen einer Schleierleuchtdichte, die von einem Fahrer (8) erfahren wird, der eine Fahrerblickhaltung (Pd) zu einem Tunneleingang (10) des Straßentunnels (2) aufweist, wobei die Fahrerblickhaltung (Pd) mindestens eine senkrechte Fahrerposition und eine Fahrerblickrichtung (rd) definiert; und
eine Lichtsteuerung (6), die mit dem Schleierleuchtdichtenabschätzungssystem (5) und der mindestens einen Lichtquelle (4) verbunden ist, zum Steuern von mindestens einer Eigenschaft des durch die mindestens eine Lichtquelle emittierten Lichts basierend auf der abgeschätzten Schleierleuchtdichte,

wobei das Schleierleuchtdichtenabschätzungssystem (5) umfasst:

einen Bildsensor (12), der eine Bildsensorblickhaltung (Pis) zum Tunneleingang (10) aufweist, die sich von der Fahrerblickhaltung (Pd) unterscheidet, wobei die Bildsensorblickhaltung (Pis) mindestens eine senkrechte Bildsensorposition und eine Bildsensorblickrichtung (ris) definiert;
Bilderfassungsschaltungen (14), die mit dem Bildsensor (12) verbunden sind, zum Erlangen eines Bildes (30) einer Tunneleingangsszene, wobei das Bild mehrere Pixel umfasst; und
Schleierleuchtdichtenabschätzungsschaltungen (15), die mit den Bilderfassungsschaltungen (14) verbunden und konfiguriert sind zum:

Bestimmen mehrerer Pixelsätze basierend auf dem Bild (30) ;
Bestimmen, für jeden Pixelsatz in den mehreren Pixelsätzen, eines Leuchtdichtenindikatorenwerts, der einen Leuchtdichtenbeitrag von einem Abschnitt der Tunneleingangsszene angibt, der dem Pixelsatz entspricht;
Zuweisen einer Abschätzungsgewichtung zu jedem von den Pixelsätzen; und
Abschätzen der Schleierleuchtdichte basierend auf einer gewichteten Summe der Leuchtdichtenindikatorenwerte von jedem der Pixelsätze unter Verwendung der Abschätzungsgewichtungen,

wobei mindestens eines von:

den mehreren Pixelsätzen;
des Leuchtdichtenindikatorenwerts von jedem der Pixelsätze; und
der Abschätzungsgewichtung, die zu jedem der Pixelsätze zugewiesen ist,
basierend auf einer Beziehung zwischen der Fahrerblickhaltung (Pd) und der Bildsensorblickhaltung (Pis) bestimmt wird.

2. System (1) nach Anspruch 1, wobei für einen gegebenen Blickabstand die Fahrerblickhaltung (Pd) eine erste senkrechte Position definiert und die Bildsensorblickhaltung (Pis) eine zweite senkrechte Position definiert, wobei die zweite senkrechte Position höher ist als die erste senkrechte Position.

3. System (1) nach Anspruch 1 oder 2, wobei der Leuchtdichtenindikatorenwert ein Wert ist, der eine Beleuchtungsstärke angibt, die durch einen Abschnitt des Bildsensors (12) erfasst wird, der dem Pixelsatz entspricht.

4. System (1) nach einem der vorstehenden Ansprüche, wobei die Bestimmung von mindestens einem von den mehreren Pixelsätzen, des Leuchtdichtenindikatorenwerts von jedem der Pixelsätze und der Abschätzungsgewichtung, die zu jedem der Pixelsätze zugewiesen ist, eine Transformation zwischen der Fahrerblickhaltung (Pd) und der Bildsensorblickhaltung (Pis) umfasst.

5. System (1) nach Anspruch 4, wobei die Transformation eine perspektivische Transformation ist.

6. System (1) nach Anspruch 4 oder 5, wobei die Transformation auf mindestens eines von dem erlangten Bild, einem Polardiagramm (20), das die Pixelsätze (21) definiert, und einer Gewichtungsmatrix für das Zuweisen von Abschätzungsgewichtungen zu jedem von den Pixelsätzen angewandt wird.

7. System (1) nach Anspruch 6, wobei die Abschätzungsgewichtung zu jedem von den Pixelsätzen zugewiesen wird durch:

Bestimmen einer ersten Gewichtungsmatrix für die Fahrerblickhaltung, wobei jedes Gewichtungselement in der ersten Gewichtungsmatrix umgekehrt proportional zum Quadrat eines Blendungswinkels in Bezug auf den Tunneleingang (10) ist; und
Ausführen der Transformation an der ersten Gewichtungsmatrix von der Fahrerblickhaltung (Pd) zur Bildsensorblickhaltung (Pis), um eine zweite Gewichtungsmatrix für die Bildsensorblickhaltung (Pis) zu bilden.

8. System (1) nach Anspruch 7, wobei:

jeder der Pixelsätze mindestens eines von den Pixeln des erlangten Bildes umfasst; und
die Abschätzung der Schleierleuchtdichte das Multiplizieren von jedem von den Pixelsätzen mit seinem entsprechenden Gewichtungselement in der zweiten Gewichtungsmatrix umfasst.

9. System (1) nach Anspruch 6, wobei die mehreren Pixelsätze bestimmt werden durch:

Bereitstellen eines ersten Polardiagramms (20) für die Fahrerblickhaltung, das erste Abschnitte (21) definiert, die individuelle Blendungsquellen bei unterschiedlichen Blendungswinkeln in Bezug auf den Tunneleingang (10) darstellen;
Ausführen der Transformation an dem ersten Polardiagramm von der Fahrerblickhaltung (Pd) zur Bildsensorblickhaltung (Pis), um ein zweites Polardiagramm (20'), das zweite Abschnitte (21') definiert, für die Bildsensorblickhaltung (Pis) zu bilden; und
Teilen der Pixel des erlangten Bildes in Pixelsätze basierend auf Positionen der Pixel in Bezug auf die zweiten Abschnitte (21').

10. System (1) nach Anspruch 6, wobei die Transformation an dem erlangten Bild, von der Bildsensorblickhaltung (Pis) zur Fahrerblickhaltung (Pd) ausgeführt wird, um ein transformiertes Bild mit mehreren Pixeln zu bilden, die auf den Pixeln des erlangten Bildes (30) basieren.

11. Verfahren zum Abschätzen einer Schleierleuchtdichte, die von einem Fahrer (8) erfahren wird, der eine Fahrerblickhaltung (Pd) zu einem Tunneleingang (10) eines Straßentunnels (2) aufweist, unter Verwendung eines Schleierleuchtdichtenabschätzungssystems (5), das umfasst:

einen Bildsensor (12), der eine Bildsensorblickhaltung (Pis) zum Tunneleingang (10) aufweist, die sich von der Fahrerblickhaltung (Pd) unterscheidet;
Bilderfassungsschaltungen (14), die mit dem Bildsensor (12) verbunden sind, zum Erlangen eines Bildes (30) einer Tunneleingangsszene, wobei das Bild mehrere Pixel umfasst; und
Schleierleuchtdichtenabschätzungsschaltungen (15), die mit den Bilderfassungsschaltungen (14) verbunden sind,

wobei das Verfahren die Schritte umfasst:

Bestimmen mehrerer Pixelsätze durch die Schleierleuchtdichtenabschätzungsschaltungen (15) basierend auf dem Bild (30);
Bestimmen, durch die Schleierleuchtdichtenabschätzungsschaltungen (15), für jeden Pixelsatz in den mehreren Pixelsätzen, eines Leuchtdichtenindikatorenwerts, der einen Leuchtdichtenbeitrag von einem Abschnitt der Tunneleingangsszene angibt, der dem Pixelsatz entspricht;
Zuweisen, durch die Schleierleuchtdichtenabschätzungsschaltungen (15), einer Abschätzungsgewichtung zu jedem der Pixelsätze; und

Abschätzen, durch die Schleierleuchtdichtenabschätzungsschaltungen (15), der Schleierleuchtdichte basierend auf einer gewichteten Summe der Leuchtdichtenindikatorenwerte von jedem der Pixelsätze unter Verwendung der Abschätzungsgewichtungen,

wobei mindestens eines von den mehreren Pixelsätzen, dem Leuchtdichtenindikatorenwert von jedem der Pixelsätze und der Abschätzungsgewichtung, die zu jedem der Pixelsätze zugewiesen ist, basierend auf einer Beziehung zwischen der Fahrerblickhaltung (Pd) und der Bildsensorblickhaltung (Pis) bestimmt wird.

12. Verfahren nach Anspruch 11, wobei mindestens eines von:

dem Schritt des Bestimmens der mehreren Pixelsätze; dem Schritt des Bestimmens des Leuchtdichtenindikatorenwerts von jedem der Pixelsätze; und
dem Schritt des Zuweisens einer Abschätzungsgewichtung zu jedem der Pixelsätze,
den Schritt des Ausführens einer Transformation zwischen der Fahrerblickhaltung (Pd) und der Bildsensorblickhaltung (Pis) umfasst.

13. Verfahren nach Anspruch 12, wobei die Transformation eine perspektivische Transformation ist.

14. Verfahren zum Steuern der Beleuchtung in einem Straßentunnel (2) unter Verwendung eines Beleuchtungssteuerungssystems (1), umfassend:

mindestens eine Lichtquelle (4), die innerhalb des Straßentunnels (2) zum Beleuchten eines Inneren des Straßentunnels angeordnet ist;
ein Schleierleuchtdichtenabschätzungssystem (5), das außerhalb des Tunnels (2) angeordnet ist, zum Abschätzen einer Schleierleuchtdichte, die von einem Fahrer (8) erfahren wird, der eine Fahrerblickhaltung (Pd) zu einem Tunneleingang (10) des Straßentunnels (2) aufweist, wobei das Schleierleuchtdichtenabschätzungssystem (5) umfasst:

einen Bildsensor (12), der eine Bildsensorblickhaltung (Pis) zum Tunneleingang (10) aufweist, die sich von der Fahrerblickhaltung (Pd) unterscheidet;
Bilderfassungsschaltungen (14), die mit dem Bildsensor (12) verbunden sind, zum Erlangen eines Bildes einer Tunneleingangsszene, wobei das Bild mehrere Pixel umfasst; und
Schleierleuchtdichtenabschätzungsschaltungen (15), die mit den Bilderfassungsschaltungen (14) verbunden sind; und
eine Lichtsteuerung (6), die mit dem Schleierleuchtdichtenabschätzungssystem (5) und der mindestens einen Lichtquelle (4) verbunden ist, zum Steuern von mindestens einer Eigenschaft des durch die mindestens eine Lichtquelle emittierten Lichts basierend auf der abgeschätzten Schleierleuchtdichte,

wobei das Verfahren die Schritte umfasst:

Abschätzen der Schleierleuchtdichte, die vom Fahrer (8) erfahren wird, unter Verwendung des Verfahrens nach einem der Ansprüche 11 bis 13;
Bereitstellen der abgeschätzten Schleierleuchtdichte an die Lichtsteuerung (6); und
Steuern, durch die Lichtsteuerung (6), der mindestens einen Lichtquelle (4), um mindestens eine Eigenschaft des durch die mindestens eine Lichtquelle emittierten Lichts basierend auf der abgeschätzten Schleierleuchtdichte zu ändern.

**Revendications**

1. Système (1) de commande d'éclairage dans un tunnel routier (2), comprenant :

au moins une source lumineuse (4) disposée à l'intérieur dudit tunnel routier (2) pour éclairer un intérieur dudit tunnel routier ;
**caractérisé en ce que** ledit système comprend en outre :

un système d'estimation de luminance voilée (5) pour estimer une luminance voilée rencontrée par un conducteur (8) présentant une pose de visualisation de conducteur (Pd) vers une entrée de tunnel (10) dudit tunnel routier (2), ladite pose de visualisation de conducteur (Pd) définissant au moins une position verticale de conducteur et un sens de visualisation de conducteur (rd) ; et

un contrôleur d'éclairage (6) connecté audit système d'estimation de luminance voilée (5) et à ladite au moins une source lumineuse (4) pour contrôler au moins une propriété de lumière émise par ladite au moins une source lumineuse (4) à partir de ladite luminance voilée estimée,

ledit système d'estimation de luminance voilée (5) comprenant :

un capteur d'images (12) présentant une pose de visualisation de capteur d'images (Pis) vers ladite entrée de tunnel (10) différente de ladite pose de visualisation de conducteur (Pd), ladite une pose de visualisation de capteur d'images (Pis) définissant au moins une position verticale de capteur d'images et un sens de visualisation de capteur d'images (ris) ;

un circuit d'acquisition d'images (14) connecté audit capteur d'images (12) pour acquérir une image (30) d'une scène d'entrée de tunnel, ladite image comprenant une pluralité de pixels ; et

un circuit d'estimation de luminance voilée (15) connecté audit circuit d'acquisition d'images (14) et conçu pour :

déterminer une pluralité d'ensembles de pixels à partir de ladite image (30) ;

déterminer, pour chaque ensemble de pixels de ladite pluralité d'ensembles de pixels, une valeur indicatrice de luminance indiquant une contribution de luminance d'une section de ladite scène d'entrée de tunnel correspondant audit ensemble de pixels ;

l'affectation d'une pondération d'estimation à chacun desdits ensembles de pixels ; et

l'estimation de ladite luminance voilée à partir d'une somme pondérée des valeurs indicatrices de luminance de chacun desdits ensembles de pixels en utilisant lesdites pondérations d'estimation ;

sachant qu'au moins un élément parmi :

ladite pluralité d'ensembles de pixels ;

ladite valeur indicatrice de luminance de chacun desdits ensembles de pixels ; et

ladite pondération d'estimation affectée à chacun desdits ensembles de pixels,

est déterminé à partir d'une relation entre ladite pose de visualisation de conducteur (Pd) et ladite pose de visualisation de capteur d'images (Pis).

2. Système (1) selon la revendication 1, dans lequel, pour une distance de visualisation donnée, ladite pose de visualisation de conducteur (Pd) définit une première position verticale et ladite pose de visualisation de capteur d'images (Pis) définit une seconde position verticale, la seconde position verticale étant plus élevée que la première position verticale.

3. Système (1) selon la revendication 1 ou 2, dans lequel ladite valeur indicatrice de luminance est une valeur indiquant une luminance captée par une section dudit capteur d'images (12) correspondant audit ensemble de pixels.

4. Système (1) selon l'une quelconque des revendications précédentes, dans lequel la détermination d'au moins un de ladite pluralité d'ensembles de pixels, ladite valeur indicatrice de luminance de chacun dudit ensemble de pixels, et ladite pondération d'estimation affectée à chacun desdits ensembles de pixels comprend une transformation entre ladite pose de visualisation de conducteur (Pd) et ladite pose de visualisation de capteur d'images (Pis).

5. Système (1) selon la revendication 4, dans lequel ladite transformation est une transformation de perspective.

6. Système (1) selon la revendication 4 ou 5, dans lequel ladite transformation est appliquée à au moins un élément parmi ladite image acquise, un diagramme polaire (20) définissant lesdits ensembles de pixels (21) et une matrice de pondération pour affecter des pondérations d'estimation à chacun desdits ensembles de pixels.

7. Système (1) selon la revendication 6, dans lequel ladite pondération d'estimation est affectée à chacun desdits ensembles de pixels en :

déterminant une première matrice de pondération pour ladite pose de visualisation de conducteur, chaque élément de pondération de ladite première matrice de pondération étant inversement proportionnel au carré d'un angle d'éblouissement par rapport à ladite entrée de tunnel (10) ; et

réalisant ladite transformation sur ladite première matrice de pondération depuis ladite pose de visualisation de conducteur (Pd) jusqu'à ladite pose de visualisation de capteur d'images (Pis) pour former une seconde matrice de pondération pour ladite pose de visualisation de capteur d'images (Pis).

8. Système (1) selon la revendication 7, dans lequel :

chacun desdits ensembles de pixels comprend au moins un des pixels de l'image acquise ; et
l'estimation de ladite luminance voilée inclut la multiplication de chacun desdits ensembles de pixels avec son élément de pondération correspondant dans ladite seconde matrice de pondération.

9. Système (1) selon la revendication 6, dans lequel ladite pluralité d'ensembles de pixels est déterminée en :

prévoyant un premier diagramme polaire (20) pour ladite pose de visualisation de conducteur, la définition de premières sections (21) représentant des sources d'éblouissement à différents angles d'éblouissement par rapport à ladite entrée de tunnel (10) ;
la réalisation de ladite transformation sur ledit premier diagramme polaire depuis ladite pose de visualisation de conducteur (Pd) jusqu'à ladite pose de visualisation de capteur d'images (Pis) pour former un second diagramme polaire (20') définissant des secondes sections (21') pour ladite pose de visualisation de capteur d'images (Pis) ; et
la division des pixels de l'image acquise en dits ensembles de pixels à partir des positions des pixels par rapport auxdites secondes sections (21').

10. Système (1) selon la revendication 6, dans lequel ladite transformation est réalisée sur l'image acquise depuis ladite pose de visualisation de capteur d'images (Pis) jusqu'à ladite pose de visualisation de conducteur (Pd) pour former une image transformée dotée d'une pluralité de pixels qui est basée sur les pixels de l'image acquise (30).

11. Procédé d'estimation d'une luminance voilée rencontrée par un conducteur (8) présentant une pose de visualisation de conducteur (Pd) vers une entrée de tunnel (10) dudit tunnel routier (2) en utilisant un système d'estimation de luminance voilée (5) comprenant :

un capteur d'images (12) présentant une pose de visualisation de capteur d'images (Pis) vers ladite entrée de tunnel (10) différente de ladite pose de visualisation de conducteur (Pd) ;
un circuit d'acquisition d'images (14) connecté audit capteur d'images (12) pour acquérir une image (30) d'une scène d'entrée de tunnel, ladite image comprenant une pluralité de pixels ; et
un circuit d'estimation de luminance voilée (15) connecté audit circuit d'acquisition d'images (14), ce procédé comprenant les étapes suivantes :

détermination, par ledit circuit d'estimation de luminance voilée (15), d'une pluralité d'ensembles de pixels à partir de ladite image (30) ;
détermination, par ledit circuit d'estimation de luminance voilée (15), pour chaque ensemble de pixels de ladite pluralité d'ensembles de pixels, d'une valeur indicatrice de luminance indiquant une contribution de luminance d'une section de ladite scène d'entrée de tunnel correspondant audit ensemble de pixels ;
affectation, par ledit circuit d'estimation de luminance voilée (15), d'une pondération d'estimation à chacun desdits ensembles de pixels ; et
estimation, par ledit circuit d'estimation de luminance voilée (15), de ladite luminance voilée à partir d'une somme pondérée des valeurs indicatrices de luminance de chacun desdits ensembles de pixels en utilisant lesdites pondérations d'estimation ;
sachant qu'au moins un élément parmi ladite pluralité d'ensembles de pixels, ladite valeur indicatrice de luminance de chacun desdits ensembles de pixels, et ladite pondération d'estimation affectée à chacun desdits ensembles de pixels est déterminé à partir d'une relation entre ladite pose de visualisation de conducteur (Pd) et ladite pose de visualisation de capteur d'images (Pis).

12. Procédé selon la revendication 11, dans lequel au moins une étape parmi :

l'étape de détermination de ladite pluralité d'ensembles de pixels ;
l'étape de détermination de ladite valeur indicatrice de luminance de chacun desdits ensembles de pixels ; et
l'étape d'affectation d'une pondération d'estimation à chacun desdits ensembles de pixels,
comprend l'étape de réalisation d'une transformation entre ladite pose de visualisation de conducteur (Pd) et ladite pose de visualisation de capteur d'images (Pis).

13. Procédé selon la revendication 12, dans lequel ladite transformation est une transformation de perspective.

EP 3 154 318 B1

14. Procédé de commande de l'éclairage dans un tunnel routier (2) en utilisant un système de commande d'éclairage (1) comprenant :

au moins une source lumineuse (4) disposée à l'intérieur dudit tunnel routier (2) pour éclairer un intérieur dudit tunnel routier ;
un système d'estimation de luminance voilée (5) disposé à l'extérieur dudit tunnel (2) pour estimer une luminance voilée rencontrée par un conducteur (8) présentant une pose de visualisation de conducteur (Pd) vers une entrée de tunnel (10) dudit tunnel routier (2), ledit système d'estimation de luminance voilée (5) comprenant :

un capteur d'images (12) présentant une pose de visualisation de capteur d'images (Pis) vers ladite entrée de tunnel (10) différente de ladite pose de visualisation de conducteur (Pd) ;
un circuit d'acquisition d'images (14) connecté audit capteur d'images (12) pour acquérir une image d'une scène d'entrée de tunnel, ladite image comprenant une pluralité de pixels ; et
un circuit d'estimation de luminance voilée (15) connecté audit circuit d'acquisition d'images (14) ; et
un contrôleur d'éclairage (6) connecté audit système d'estimation de luminance voilée (5) et à ladite au moins une source lumineuse (4) pour contrôler au moins une propriété de lumière émise par ladite une source lumineuse à partir de ladite luminance voilée estimée,
ledit procédé comprenant les étapes suivantes :

estimation de ladite luminance voilée rencontrée par ledit conducteur (8) en utilisant le procédé selon l'une quelconque des revendications 11 à 13 ;
communication de ladite luminance voilée estimée audit contrôleur d'éclairage (6) ; et
contrôle, par ledit contrôleur d'éclairage (6), de ladite au moins une source lumineuse (4) pour modifier au moins une propriété de lumière émise par l'au moins une source lumineuse à partir de la luminance voilée estimée.

Fig. 1a

Fig. 1b

*Fig. 2a*

*Fig. 2b*

Fig. 3

*Fig. 4a*

*Fig. 4b*

*Fig. 4c*

Fig. 5a

Fig. 5b

Fig. 5c

## REFERENCES CITED IN THE DESCRIPTION

**Patent documents cited in the description**

• JP 2008241380 B

**Non-patent literature cited in the description**

• GUIDE FOR THE LIGHTING OF ROAD TUNNELS AND UNDERPASSES. *CIE,* 2004, vol. 88, ISBN 3 901 906 31 2